# EUROPEAN PATENT APPLICATION

(11) **EP 3 026 273 A1**
(43) Date of publication of application: **01.06.2016**
(21) Application number: 14829189.1
(22) Date of filing: 26.06.2014
(51) Int. Cl.: F16B 19/06, B21J 15/00, B23K 11/00, B23K 11/11

(54) **RIVET FOR CONNECTING DIFFERENT MATERIALS, MEMBER FOR CONNECTING DIFFERENT MATERIALS, METHOD FOR MANUFACTURING JOINED BODY OF DIFFERENT MATERIALS, AND JOINED BODY OF DIFFERENT MATERIALS**

(30) Priority: 22.07.2013 JP 2013151393; 20.03.2014 JP 2014057476
(71) Applicant: Kabushiki Kaisha Kobe Seiko Sho (Kobe Steel, Ltd.), Kobe-shi, Hyogo 651-8585 (JP)
(72) Inventor: IWASE Tetsu, Tochigi 321-4367 (JP)
(74) Representative: Müller-Boré & Partner Patentanwälte PartG mbB
(86) International application number: PCT/JP2014/067088
(87) International publication number: WO 2015/012058

(57) **Abstract**

A rivet (1) for connecting different materials, equipped with: a shaft part (2), which is inserted into a first material to be joined (200), and the tip of which is welded to a second material to be joined (300) that is a different type of material than the first material to be joined (200); and a plate-shaped head part (3) provided at the base end on the opposite side from the tip of the shaft part (2) in the axial direction. A first chamfered part (30), which is located at the outer edge of the surface in contact with the first material to be joined (200), an annular groove (31), which is located around the shaft part in the surface in contact with the first material to be joined (200), and a flat part (32), which is located between the first chamfered surface (30) and the annular groove (31) on the surface in contact with the first material to be joined (200), are formed on the head part (3). The rivet (1) for connecting different materials is formed of the same type of material as the second material (300).

## Description

### Technical Field

The present invention relates to a dissimilar material joining rivet, a dissimilar material joining member, a method of manufacturing a dissimilar material joined body, and a dissimilar material joined body.

### Background Art

In recent years, in the manufacture of structural bodies, for example, of automobiles and railway vehicles, it has been studied to replace a portion of steel materials used so far with light alloys such as aluminum and magnesium. This can attain decrease in the weight of the vehicles. For this purpose, joining is necessary between dissimilar materials of a light alloy and a steel material.

A method of joining dissimilar materials includes spot welding, joining by bolts, joining by rivets and joining by using adhesives. Among them, since a method of clinching a light alloy by using a rivet made of steel and spot welding the rivet and the steel material enables strong dissimilar material joining, various studies have been made for the improvement of the rivet.

For example, Patent Literature 1 describes a technique of fixing a material to be joined with a protrusion provided below a head of a rivet. According to this technique, displacement between the fixed rivet and the material to be joined can be prevented. Further, Patent Literature 2 discloses a dissimilar material joining rivet shaped such that an inner portion is raised more than a circumferential edge at the tip surface of stem. According to the technique, an electric current from an electrode upon welding can be supplied being concentrated to the vicinity of the axial center of the rivet as much as possible.

### Citation List

### Patent Literature

Patent Literature 1: Specification of German Patent Application Laid-Open No. 4237361
Patent Literature 2: Japanese Unexamined Patent Application Publication No. 2010-207898

### Summary of Invention

### Technical Problem

However, in the rivet described in the Patent Literature 1, since a protrusion is fixed being bitten into a material to be joined, plastic flow of the material to be joined is hindered near a portion of biting the rivet. This makes it difficult to clinch the member to be joined to the rivet. Further, in a case of spot welding, if a target position of the electrode is displaced outward from the center of the rivet, a nugget of spot welding is formed being displaced from the center of the rivet and the member to be joined tends to be softened in a case where the melting point of the member to be joined is lower than that of the rivet. In addition, when the electrode exerts a pressure, the protrusion of the rivet is depressed into the softened member to be joined and the stem of the rivet tilts greatly from the vertical state. As a result, intrusion of the head of the rivet into the member to be joined is partially displaced. Further, in the opposite intruding portion, thickness of the member is decreased remarkably in the intrusion portion on the opposite side to lower the joining strength significantly between the rivet and the member to be joined. Further, it is necessary that a flat portion is formed to the head of the rivet so as to retain the member to be joined and it is desired that the thickness of the head is as thin as possible with a view point of the appearance of the joined body, etc. (0.5 to 3 mm, preferably, 0.8 to 2 mm). However, while it is preferred that the rivet is formed by forging with a view point of production cost, the forged rivet involves a problem that it is difficult to form a flat portion at the head and to decrease the thickness of the head.

Further, the technique described in the Patent Literature 2 also involves a problem that if a target position of the electrode is displaced greatly from the center of the rivet upon spot welding, the rivet is tilted and the joining strength between the rivet and the member to be joined tends to be lowered depending on the softened state of the member to be joined. As described above, existent rivets are not sufficient with respect to the increase of the joining strength for dissimilar materials.

In view of the above, the present invention intends to provide a dissimilar material joining rivet capable of decreasing the thickness of the head while forming a flat portion to the head and capable of improving the joining strength of the dissimilar material joined body, a dissimilar material joining member, dissimilar material joined body using the dissimilar material joining rivet, and a method of manufacturing the dissimilar material joined body.

### Solution to Problem

The present invention has been accomplished as a result of earnest studies made by present inventors, etc. for solving the subjects described above and provides a dissimilar material joining rivet including a stem inserted in a first joined member and welded at a tip to a second joined member made of a material different from that of the first joined member, and a plate-like head disposed to the base end of the stem on the side axially opposite to the tip in which the head is formed with a first chamfered portion situated to the outer edge of a surface in contact with the first joined member, an annular groove situated along the periphery of the stem at the surface in contact with the first joined member, and a flat portion situated between the first chamfered portion and the annular groove at the surface in contact with the first joined member, the rivet comprising a material resembling that of the second joined member.

Since the dissimilar material joining rivet has the first chamfered portion provided to the head, even if a positional displacement between the electrode and the rivet, that is, displacement of a target position of the electrode occurs, tilting and piercing of the head into the first joined member can be suppressed. Further, the dissimilar material joining rivet has no requirement for the configuration of increasing the thickness at the outer edge of the head.

Further, the dissimilar material joining rivet may be formed with a second chamfered portion along the outer edge of the annular groove. In this case, the second chamfered portion may be either a curved surface portion or a C-shaped chamfered surface.

Further, the first chamfered portion may be a curved surface portion or a C-shaped chamfered portion.

Further, the present invention provides the above described dissimilar material joining rivet, and the first joined member to which the dissimilar material joining rivet is inserted, in which the stem is inserted into the first joined member as far as a position where the head is in contact with the first joined member and the tip of the stem protrudes from the first joined member, and the first joined member flows plastically into the annular groove while the first joined member is urged by the flat portion of the head and the dissimilar material joining rivet is clinched to the first joined member.

Further, the present invention provides a method of manufacturing a dissimilar material joined body including a step of inserting the dissimilar material joining rivet into the first joined member as far as a position where the head is in contact with the first joined member and the tip of the stem protrudes from the first joined member, and causing the first joined member to flow plastically into the annular groove while urging the first joined member by the flat portion of the head, thereby clinching the dissimilar material joining rivet to the first joined member, a step of superimposing the first joined member to which the dissimilar material joining rivet is clinched on the second joined member, and a step of spot welding the second joined member and the dissimilar material joining rivet.

In the step of spot welding the second joined member and the dissimilar material joining rivet, a current is supplied to the second joined member and the dissimilar material joining rivet while the head of the dissimilar material joining rivet is pressed by an electrode, thereby flaring the tip region of the stem from the axial center to the direction of the outer edge while welding the tip of the stem and the second joined member.

Further, the present invention provides a dissimilar material joined body manufactured by the method of manufacturing the dissimilar material joined body described above.

### Advantageous Effects of Invention

According to the present invention, the thickness of the head can be decreased while forming a flat portion to the head and can improve the joining strength of the dissimilar material joined body.

### Brief Description of Drawings

[Fig. 1] is a perspective view of a dissimilar material joining rivet of a first embodiment according to the present invention.
[Fig. 2] is an axial cross sectional view of the dissimilar material joining rivet of the first embodiment.
[Fig. 3A] is an axial cross sectional view illustrating a case in which a first chamfered portion is a curved surface portion.
[Fig. 3B] is an axial cross sectional view illustrating a case in which the first chamfered portion is a C-shaped chamfered portion.
[Fig. 4A] is an axial cross sectional view illustrating a state of spot welding by using the dissimilar material joining rivet of the first embodiment.
[Fig. 4B] is an axial cross sectional view illustrating a state of spot welding by using the dissimilar material joining rivet of the first embodiment.
[Fig. 4C] is an axial cross sectional view illustrating a state of spot welding by using a dissimilar material joining rivet of a relevant technique.
[Fig. 4D] is an axial cross sectional view illustrating a state of spot welding by using the dissimilar material joining rivet of the relevant technique.
[Fig. 5A] is an explanatory view for a step of partially covering a dissimilar material joining rivet of the first embodiment with a coating film.
[Fig. 5B] is an explanatory view for a step of partially covering a dissimilar material joining rivet of the first embodiment with a coating film.
[Fig. 5C] is an explanatory view for a step of partially covering a dissimilar material joining rivet of the first embodiment with a coating film.
[Fig. 6] is an explanatory view for a step of partially removing the coating film from the dissimilar material joining rivet of the first embodiment.
[Fig. 7A] is a bottom view of a dissimilar material joining rivet of the first embodiment.
[Fig. 7B] is a bottom view of a dissimilar material joining rivet.
[Fig. 7C] is a bottom view of a dissimilar material joining rivet.
[Fig. 7D] is a bottom view of a dissimilar material joining rivet.
[Fig. 7E] is a bottom view of a dissimilar material joining rivet.
[Fig. 8A] is a plan view of the dissimilar material joining rivet of the first embodiment.
[Fig. 8B] is a plan view of a dissimilar material joining rivet.
[Fig. 8C] is a plan view of a dissimilar material joining rivet.
[Fig. 8D] is a plan view of a dissimilar material joining rivet.
[Fig. 9A] is an axial cross sectional view of a dissimilar material joining rivet.
[Fig. 9B] is an axial cross sectional view of a dissimilar material joining rivet.
[Fig. 9C] is an axial cross sectional view of a dissimilar material joining rivet.
[Fig. 9D] is an axial cross sectional view of a dissimilar material joining rivet.
[Fig. 9E] is an axial cross sectional view of a dissimilar material joining rivet.
[Fig. 9F] is an axial cross sectional view of a dissimilar material joining rivet.
[Fig. 9G] is an axial cross sectional view of a dissimilar material joining rivet.
[Fig. 10A] is an axial cross sectional view illustrating a case where a second chamfered portion disposed to a dissimilar material joining rivet in a modified example of the first embodiment is a curved surface portion.
[Fig. 10B] is an axial cross sectional view illustrating a case where a second chamfered portion disposed to a dissimilar material joining rivet of a modified example is a C-shaped chamfered portion.
[Fig. 10C] is an axial cross sectional view illustrating a case where the second chamfered portion disposed to the dissimilar material joining rivet of the modified example is a curved surface portion.
[Fig. 11A] is an explanatory view illustrating a state where a dissimilar material joining rivet of the first embodiment is clinched to the first joined member.
[Fig. 11B] is an explanatory view illustrating a state where the dissimilar material joining rivet of a modified example is clinched to a first joined member.
[Fig. 12] is an axial cross sectional view illustrating a state before a dissimilar material joined body of a third embodiment of the present invention is spot welded.
[Fig. 13A] is an explanatory view illustrating a manufacturing step of a dissimilar material joined body of the third embodiment.
[Fig. 13B] is an explanatory view illustrating a manufacturing step of a dissimilar material joined body of the second and the third embodiments.
[Fig. 13C] is an explanatory view illustrating a manufacturing step of the dissimilar material joined body of the third embodiment.
[Fig. 14A] is an explanatory view illustrating a manufacturing step of the dissimilar material joined body of the third embodiment.
[Fig. 14B] is an explanatory view illustrating a manufacturing step of the dissimilar material joined body of the third embodiment.
[Fig. 15A] is an explanatory view illustrating a manufacturing step of a dissimilar material joining member constituting a dissimilar material joined body of the third embodiment.
[Fig. 15B] is an explanatory view illustrating a manufacturing step of a dissimilar material joining member constituting a dissimilar material joined body of the third embodiment.
[Fig. 15C] is an explanatory view illustrating a manufacturing step of a dissimilar material joining member constituting a dissimilar material joined body of the second or the third embodiments.

### Description of Embodiments

Embodiments of practicing the present invention are to be described in details. The present invention is not restricted to the embodiments to be described below.

### < First Embodiment >

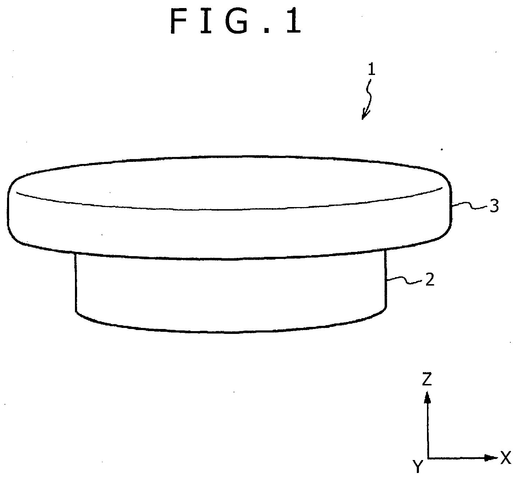

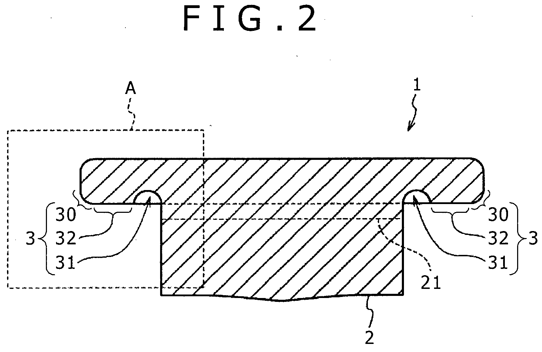

A dissimilar material joining rivet 1 of a first embodiment of the present invention is to be described. Fig. 1 is a perspective view of the dissimilar material joining rivet 1 of this embodiment. Fig. 2 is a cross sectional view of the dissimilar material joining rivet 1 of this embodiment.

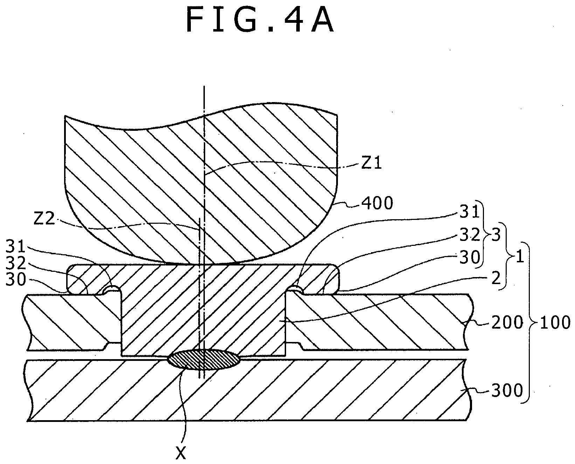

As illustrated in Fig. 1, the dissimilar material joining rivet 1 of this embodiment has a columnar stem 2 and a disk-like head 3 disposed at one end (base end) of the stem 2 and has a substantially T-shaped cross sectional configuration in an axial direction which is a direction along which the head is disposed to the stem 2 (Z axis direction in the drawing). In the dissimilar material joining rivet 1, the stem 2 is inserted through a first joined member 200, and the tip of the stem 2 is spot welded to a second joint member 300. Thus, a dissimilar material joined body 100 in which the first joined member 200 and the second joined member 300 are joined is manufactured (for the dissimilar material joined body 100, the first joined member 200 and the second joined member 300, refer to Fig. 4A, etc. to be described later).

The material for the dissimilar material joining rivet 1 is formed of a material resembling that for the second joined member 300 in order to suppress generation of a highly fragile intermetallic compound. In a case where the second joined member 300 is formed of steel materials such as cold rolled steel sheets and steel strips SPCC (JIS G 3141:2011), and galvanized steel sheets and high tensile strength steel sheets, the rivet 1 can be made of steel materials such as soft steels or ordinary steels. Specifically, the rivet 1 may be made of a material comprising iron as a main component and carbon, chromium, nickel, molybdenum, etc. added properly thereto.

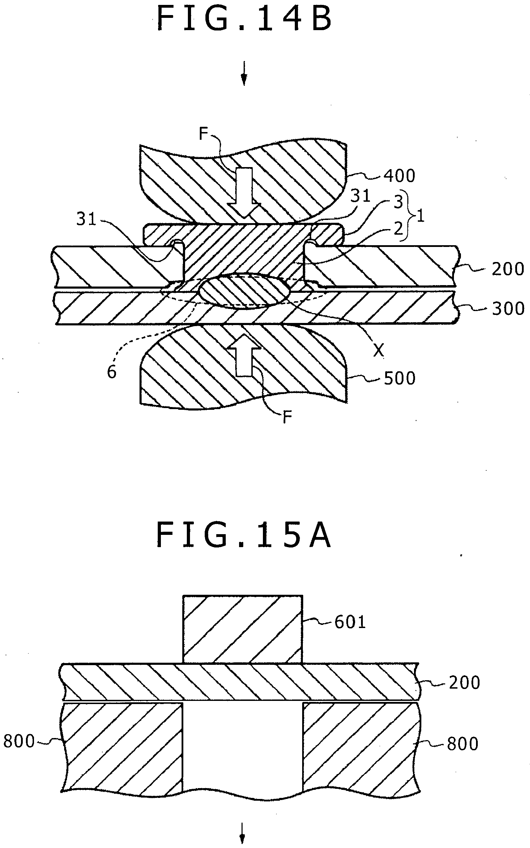

Although not restricted particularly, the tip of the stem 2 can be formed into a shape protruding more at a position nearer to the center relative to the outer edge as illustrated in Fig. 2. In the dissimilar material joining rivet 1 of the present embodiment, when the stem 2 is spot welded to the second joined member 300, the tip region of the stem 2 may be flared being softened by the heat of spot welding and pressed by an electrode. Thus, the dissimilar material joined body 100 to be described later has a shape in which a flared tip 6 (refer to Fig. 14B to be described later) formed by flaring of the tip region 5 of the dissimilar material joining rivet 1 (refer to Fig. 14B to be described later) and the first joined member 200 engage to each other, so that the dissimilar material joining rivet 1 is less detached from the first joined member 200.

As illustrated in Fig. 2, the head 3 disposed to the base end on the side axially opposite to the tip of the stem 2 has a first chamfered portion 30 formed along the outer edge of a surface in contact with the first joined member 200. Further, an annular groove 31 is formed along the periphery of the region of the base end 21 of the stem 2 at the surface of the head 3 in contact with the first joined member 200. A flat portion 32 is formed on the surface between the annular groove 31 and the first chamfered portion 30.

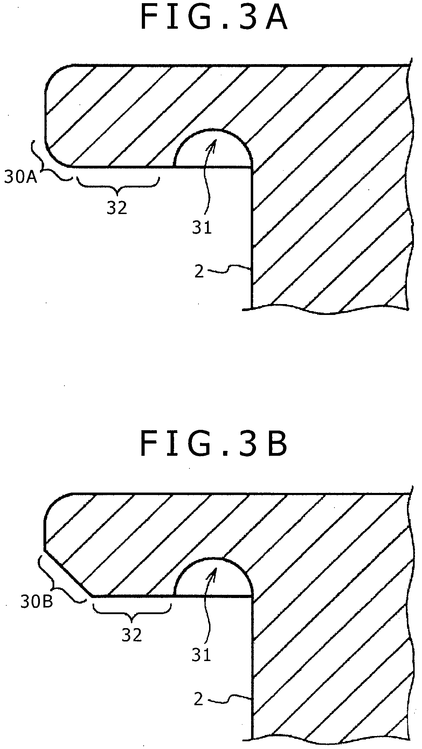

The configuration of the first chamfered portion 30 is to be described more specifically with reference to Fig. 3A and Fig. 3B. Fig. 3A and Fig. 3B are views illustrating examples of the shape of the first chamfered portion. The shape of the first chamfered portion 30 is not particularly restricted so long as the outer edge of the head 3 is chamfered. For example, as illustrated in Fig. 3A, the first chamfered portion 30 may be a curved surface portion 30A in which the outer edge of the surface in contact with the first joined member 200 is curved convexly. As illustrated in Fig. 3B, the first chamfered portion 30 may be a C-shaped chamfered portion 30B in which the outer edge of the surface in contact with the first joined member 200 is chamfered in a C-shape. Further, the first chamfered portion 30 may be a combination of curved surfaces having a plurality of radii of curvature or may be a polygonal shape so long as a load is not concentrated to a corner when the dissimilar material joining rivet 1 is tilted. In a case where the first chamfered portion 30 is a curved surface portion 30A with a thickness of the head of 0.5 to 3 mm, the size of the first chamfered portion 30 is preferably such that the radius of curvature is 0.2 mm or more. When the first chamfered portion 30 is a C-shaped chamfered portion 30B, it is preferred that the chamfering depth is 0.2 mm or more and 80% or less of the thickness of the head 3.

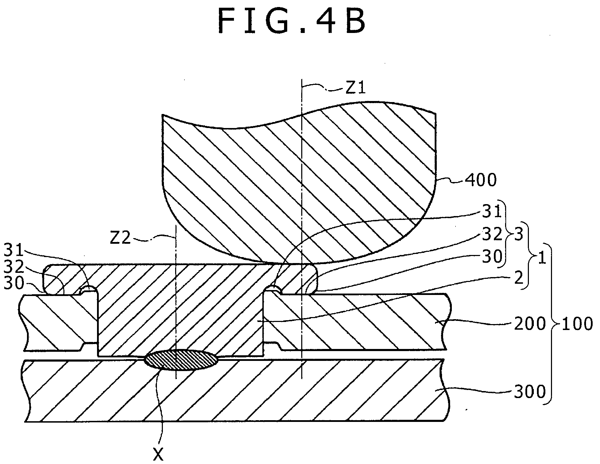

Fig. 4A and Fig. 4B are axial cross sectional views illustrating states that the dissimilar material joining rivet 1 is spot welded to the second joined member 300 by an electrode 400. As illustrated in Fig. 4A, since they can be welded stably when the dissimilar material joining rivet 1 is not tilted, it is primarily preferred that the position between the axis Z1 of the electrode 400 and the axis Z2 of the rivet 1 are not displaced as much as possible. In the drawing, reference sign X represents a nugget (molten portion).

On the other hand, in the spot welding of a structure such as an automobile body, positional displacement between the axis Z1 and axis Z2 illustrated in Fig. 4A is sometimes enlarged. In this case, as illustrated in Fig. 4B, a moment load that tilts the dissimilar material joining rivet 1 increases. Then, the end of the head 3 of the dissimilar material joining rivet 1 is urged by the electrode 400 to the surface of the first joined member 200. In the dissimilar material joining rivet 1 of this embodiment, the chamfered portion 30 is formed along the outer edge of the head 3 at the surface in contact with the first joined member 200. Further, a flat portion 32 is formed between the annular groove 31 disposed along the periphery of the base end 21 of the stem 2 in the dissimilar material joining rivet 1. Accordingly, even if the target position of the electrode 400 is displaced, lowering of the clamping force between the first joined member 200 and the dissimilar material joining rivet 1 due to depression of the first chamfered portion 30 into the first joined member 200 can be suppressed.

In a case where the tip of the stem 2 of the dissimilar material joining rivet 1 is in a shape protruding more at a position nearer to the center relative to the outer edge, current from the electrode 400 flows passing through the axial center of the dissimilar material joining rivet 1 to the second joined member 300. Accordingly, the dissimilar material joining rivet 1 and the second joined member 300 are spot welded at the central portion of the dissimilar material joining rivet 1. Accordingly, softening or melting, by excess heating, of a portion of the first joined member 200 that contributes to the clinching at the periphery of the stem 2 of the dissimilar material joining rivet 1 can be suppressed more accurately. Further, in a case where the tip of the stem 2 of the dissimilar material joining rivet 1 is in a shape protruding more at a position nearer to the center relative to the outer edge, a gap tends to be formed between the first joined member 200 and the second joined member 300. Accordingly, transmission of high temperature of the molten nugget X formed between the second joined member 300 and the dissimilar material joining rivet 1 to the first joined member 200 can be suppressed more accurately.

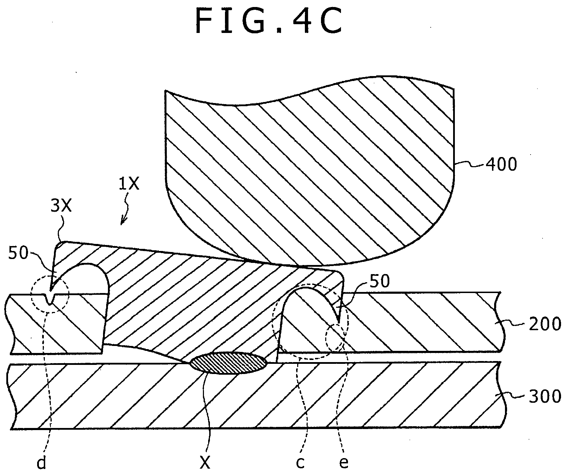

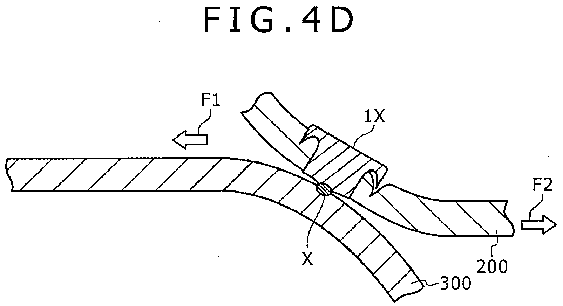

On the other hand, Fig. 4C and Fig. 4D are axial cross sectional views illustrating states of spot welding the dissimilar material joined body by using a dissimilar material joining rivet 1X of an existent technique relevant to this embodiment. As illustrated in Fig. 4C, in the dissimilar material joining rivet 1X of the relevant technique, a protrusion 50 is provided to a head 3X, and the protrusion 50 is bitten and fixed to the first joined member 200. Then, since the plastic flow of the first joined member 200 in the horizontal direction is hindered near the bitten portion, the first joined member 200 is not clinched to the rivet 1X.

If the target position of the electrode 400 is displaced from the center of the rivet 1X, a molten nugget X is formed being localized to the first joined member 200. In the region c of the first joined member 200, softening and melting are generated due to excess heating. Then, since the electrode 400 presses the dissimilar material joining rivet 1X, the protrusion 50 of the dissimilar material joining rivet 1X is depressed into the first joined member 200 to result a state that the axis of the dissimilar material joining rivet 1X is greatly tilted from the horizontal state.

As a result, in the dissimilar material joining rivet 1X of the relevant technique, when the target position of the electrode 400 is greatly displaced, intrusion of the protrusion 50 of the head 3X to the first joined member 200 is sometimes detached (refer to reference d in Fig. 4C). Further, the protrusion 50 bit deeply at the biting portion to sometimes decrease the thickness (reference e in Fig. 4C). As described above, sufficient joining strength cannot be obtained sometimes for the manufactured dissimilar material joined body by the dissimilar material joining rivet 1X of the relevant technique.

Accordingly, when the dissimilar material joining rivet 1X is used as illustrated in Fig. 4D, if the tensile load exerts on the first joined member 200 and the second joined member 300 in the directions of arrows F1 and F2, the dissimilar material joined body is easily raptured even by a low tensile load.

The dissimilar material joining rivet 1 of this embodiment is referred to again. In the dissimilar material joining rivet 1 of this embodiment, at least a portion of the surface of the head 3 and the stem 2 in contact with the first joined member 200 may be covered with a coating film 4 having higher resistivity than that of the base material of the second joined member 300. The coating film 4 includes, specifically, a painted film with rust preventive material containing zinc, tin, aluminum, etc., a polyester type resin coating film, coating film containing a silicone elastomer, an iron oxide coating film (black skin layer), electroless Ni-P plating coating film and like other dielectric coating film. The dielectric coating film includes dielectric coating films formed by using commercially available surface treating agents such as DISGO (registered trademark), GEOMET (registered trademark) and LAFRE (registered trademark).

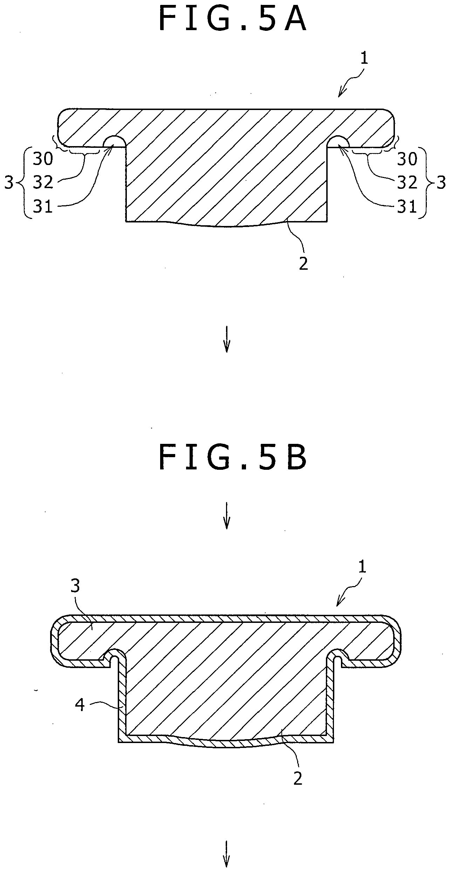

Examples of a step of coating the coating layer 4 to the dissimilar material joining rivet 1 of this embodiment are to be described with reference to Fig. 5A to Fig. 5C. Fig. 5A to Fig. 5C are explanatory views of a step of covering a portion of the dissimilar material joining rivet 1 with a coating film 4.

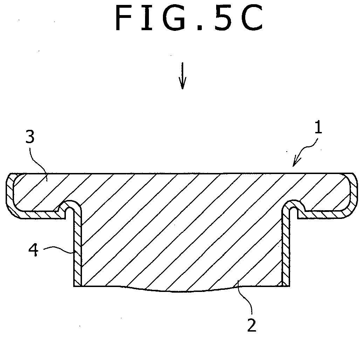

At first, a coating film 4 is formed over the entire outer surface of a dissimilar material joining rivet 1 not covered with the coating film 4 illustrated in Fig. 5A (refer to Fig. 5B). Then, as illustrated in Fig. 5C, the coating film is peeled off from regions of the dissimilar material joining rivet 1 in contact with the electrode 400 for spot welding and the second coated material 300 to be described later.

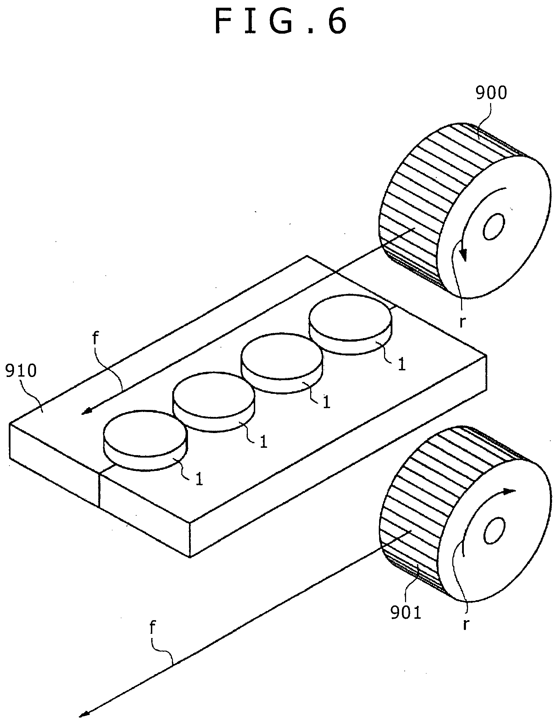

A method of peeling off a portion of the coating film 4 from the dissimilar material joining rivet 1 is to be described more specifically with reference to Fig. 6. Fig. 6 is an explanatory view for a step of partially removing the coating film from the dissimilar material joining rivet 1 of this embodiment. First, as illustrated in Fig. 6, dissimilar material joining rivets 1 are held to a holding portion 910. Then, an upper brush 900 that moves over the surface on the side of the head of the dissimilar material joining rivet 1 in contact with the electrode 400 during welding and a lower brush 901 that moves over the surface on the side of the tip of the stem of the dissimilar material joining rivet 1 in contact with a second joined member 300 during welding are moved in the direction of arrows f while rotating in the direction of an arrow r. Thus, a portion of the coating film of the dissimilar material joining rivet 1 is removed. Specifically, in the dissimilar material joining rivet 1, the coating film 4 covering the region in contact with the electrode 400 and the second joined member 300 during welding is removed.

The configuration of a coating film peeling device (entire view is not illustrated) of rotationally moving the upper brush 900 and the lower brush 901 is not particularly restricted. The method of removing the coating film 4 from the dissimilar material joining rivet 1 is not restricted to the example which has been explained with reference to Fig. 6 so long as the coating film 4 covering the regions in contact with the electrode 400 and the second joined member 300 during welding is removed.

As described above, the coating film 4 having a higher resistivity than that of the base material of the second joined member 300 covers the surface of the head 3 in contact with the first joined member 200. Accordingly, a welding current flowing from the electrode 400 by way of the dissimilar material joining rivet 1 to the second joined member 300 can be prevented from shunting to the first joined member 200. Further, since the regions in contact with the electrode 400 for spot welding and the second joined member 300 are not coated and the current flows concentrically to the second joined member 300, the dissimilar material joining rivet 1 and the second joined member 300 can be spot welded more efficiently.

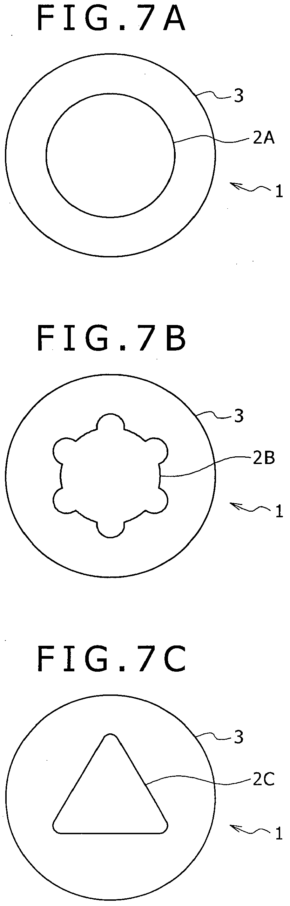

Then, the shape of the dissimilar material joining rivet 1 of the first embodiment is to be described. In the dissimilar material joining rivet 1 of this embodiment, the shape of the stem 2 is, for example, substantially columnar and the shape of the bottom is circular. While the shape of the bottom is not particularly restricted, specific examples thereof are to be described with reference to Fig. 7A to Fig. 7E. Fig. 7A to Fig. 7E illustrate examples for the bottom views of the rivet 1.

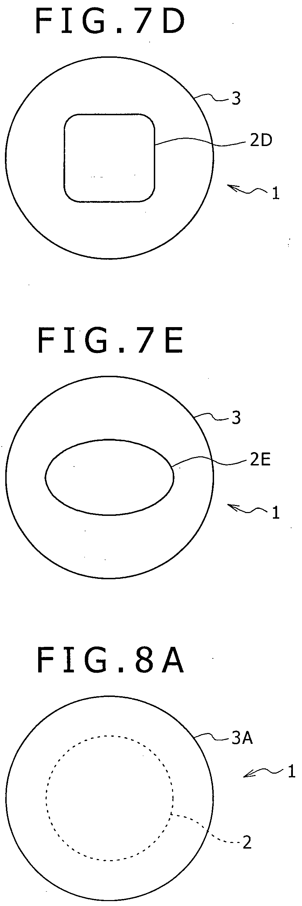

The bottom shape of a stem 2A is, for example, circular as illustrated in Fig. 7A. Further, the bottom shape of a stem 2B is, for example, petaloid as illustrated in Fig. 7B. Further, the bottom shape of a stem 2C is substantially trigonal chamfered at three corners as illustrated in Fig 7C. Further, the bottom shape of a stem 2D may also be substantially rectangular chamfered at four corners as illustrated in Fig. 7D. Further, the bottom shape of a stem 2E may be elliptic as illustrated in Fig. 7E. For example, when the bottom shape of the stem 2 is in the shape as illustrated in Fig. 7B, since this is a shape in which a plurality of protrusions are formed on the circumference, rotation of the rivet 1 can be prevented after insertion of the rivet 1 through the first joined member 200.

While the dissimilar material joining rivet 1 of this embodiment is not particularly restricted for the planar shape of the head 3 (X-Y planar shape vertical to the axis Z in Fig. 1) and specific examples are to be described with reference to Fig. 8A to Fig. 8D. Fig. 8A to Fig. 8D are examples of plan views of the dissimilar material joining rivet 1.

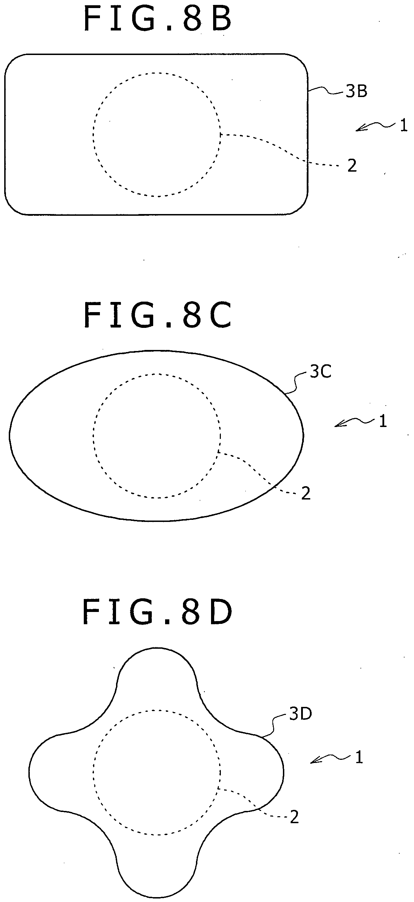

The planar shape of a head 3A is, for example, circular as illustrated in Fig. 8A. Further, the planar shape of a head 3B is, for example, substantially rectangular chamfered at four corners as illustrated in Fig. 8B. Further, the planar shape of a head 3C may also be elliptic as illustrated in Fig. 8C. Further, the planar shape of a head 3D may also be petaloid as illustrated in Fig. 8D.

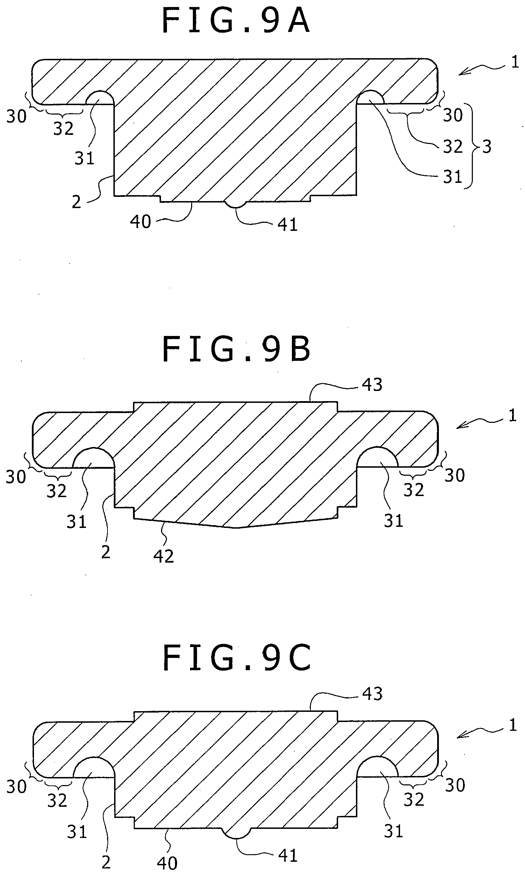

The dissimilar material joining rivet 1 of this embodiment is not restricted only to that shown in Fig. 2 also for the shape per se of the rivet 1. Specific examples thereof are to be explained with reference to Fig. 9A to Fig. 9G. Fig. 9A to Fig. 9G illustrate axial cross sectional shapes of the dissimilar material joining rivet 1 (cross sectional shape in the direction vertical to X-axis or Y-axis in Fig. 1).

The cross sectional shape of the rivet 1 may also be a shape, for example, as illustrated in Fig. 9A with reference to the shape illustrated in Fig. 2, in which a first bulge 40 is provided at the tip of the stem 2 and a protrusion 41 is provided at the center of the first bulge 40. Further, the cross sectional shape of the dissimilar material joining rivet 1 may also be a shape in which a second bulge 43 is provided to the surface of the head 3 opposite to the surface in contact with the first joined member 200 and a first bulge 42 having a surface protruding toward the center is provided at the tip of the stem 2. Further, the cross sectional shape of the dissimilar material joining rivet 1 may be such that both of a first bulge 40 and a protrusion 41 and a second bulge 43 are provided as illustrated in Fig. 9C.

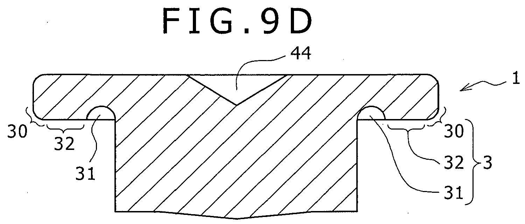

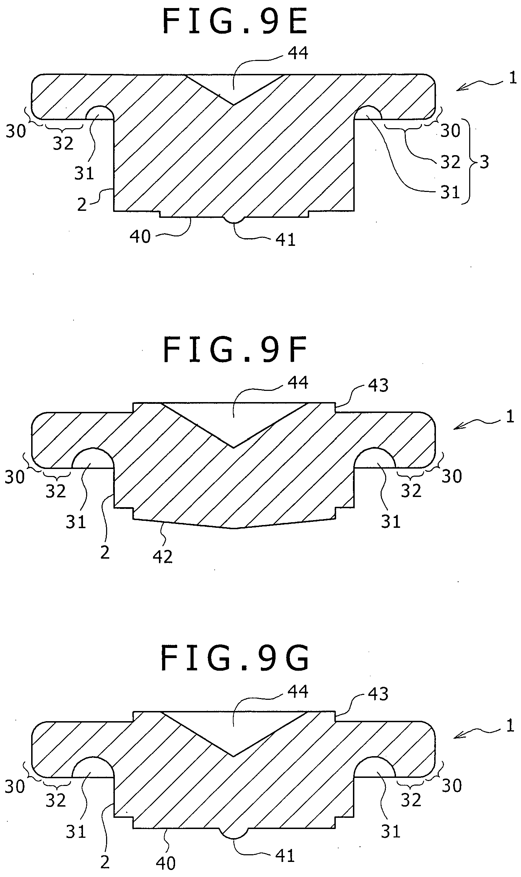

Further, the cross sectional shape of the dissimilar material joining rivet 1 may also be such that a recess 44 is formed to the center at the surface of the head 3 opposite to the surface in contact with the first joined member 200 as illustrated in Fig. 9D. Further, as illustrated in Fig. 9E, the cross sectional shape of the dissimilar material joining rivet 1 may be such that a recess 44, and a first bulge 40 and a protrusion 41 are provided. Further, as illustrated in Fig. 9F, the cross sectional shape of the dissimilar material joining rivet 1 may also be such that the first bulge 42 and the second bulge 43 are provided and the recess 44 is formed. Further, as illustrated in Fig. 9G, the cross sectional shape of the dissimilar material joining rivet 1 may also be such that the first bulge 40 and the protrusion 41, and the second bulge 43 are provided, and the recess 44 is formed.

As has been described above specifically, in the dissimilar material joining rivet 1 of this embodiment, the first chamfered portion 30 is formed along the outer edge at the lower surface of the head 3. Accordingly, if a positional displacement is caused relevant to the electrode upon spot welding, the head 3 does not pierce into the first joined member 200 and tilting of the dissimilar material joining rivet 1 is suppressed. As a result, a dissimilar material joined body 100 having high joining strength with no embrittlement of the first joined member 200 can be manufactured. Further, since the dissimilar material joining rivet 1 of this embodiment requires no configuration for the head 3 of increasing the thickness of the protrusion, etc., the head 3 can be designed so as to have a decreased thickness.

Further, since the annular groove 31 is formed to the base end 21 of the stem 2 of the dissimilar material joining rivet 1, the first joined member 200 can flow plastically into the groove portion and the clinching force between the dissimilar material joining rivet 1 and the first joined member 200 can be improved.

Further, since the flat portion 32 is formed between the first chamfered portion 30 and the annular groove 31 at the surface in contact with the first joined member 200, even if the dissimilar material joining rivet 1 is tilted being urged by the electrode 40, the pressure of the dissimilar material joining rivet 1 on the first joined member 200 is moderated at the flat portion 32. Accordingly, depression of the head 3 of the dissimilar material joining rivet 1 into the first joined member 200 can be suppressed. Further, the first joined member 200 can flow plastically from the flat portion 32 to the annular groove 31 smoothly thereby capable of improving the clinching force.

### (Modified Example)

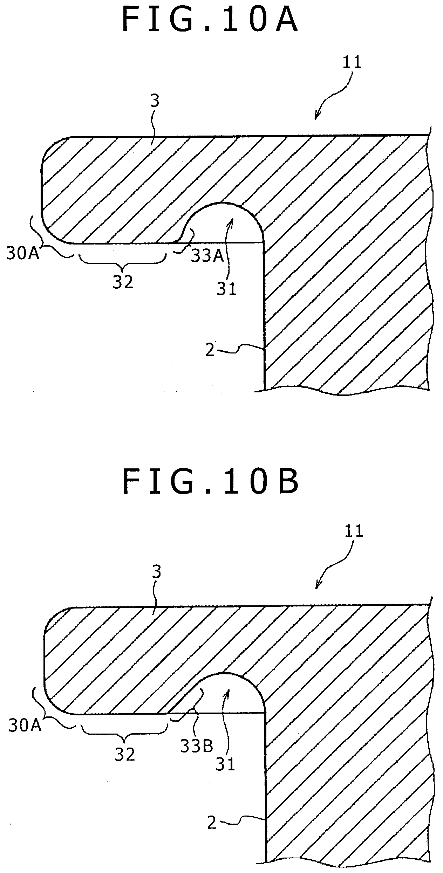

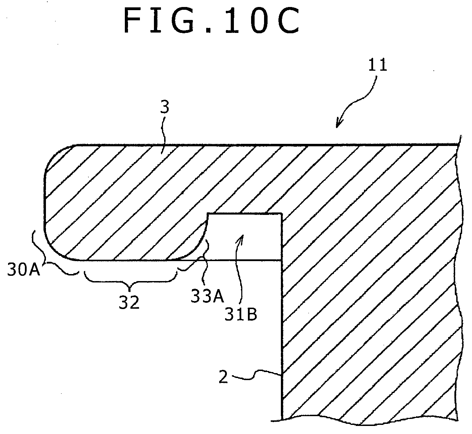

Then, a dissimilar material joining rivet 11 of a modified example of this embodiment is to be described. Fig. 10A, Fig. 10B, and Fig. 10C are views for explaining the shape of the second chamfered portion such as a curved surface portion 33A provided to a dissimilar material joining rivet 11 of the modified example of this embodiment.

In the dissimilar material joining rivet 11 of the modified example of this embodiment, the chamfered second chamfered portion is formed to the outer edge of an annular groove 31 (end on the side of a flat portion). The shape of the second chamfered portion is not particularly restricted so long as the outer edge of the annular groove 31 is chamfered. For example, the second chamfered portion illustrated in Fig. 10A is a curved surface portion 33A in which the outer edge of the annular groove 31 is curved convexly. Further, as illustrated in Fig. 10B, the second chamfered portion may also be a C-shaped chamfered portion 33B in which the outer edge of the annular groove 31 is chamfered in a C-shape. Further, as illustrated in Fig. 10C, the cross sectional shape of the annular groove 31B may not always be a substantially semi-circular shape so long as a second chamfered portion such as a curved surface 33A is formed. In this case, the annular groove 31B may also be provided with a not curved corner on the side where the head 3 and the electrode 4 are in contact to the stem 2 (on the positive side of the Z axis in Fig. 1). The radius of curvature of the curved surface portion 33A is not particularly restricted and can be made identical with the curved surface portion 30A of the first chamfered portion 30 described above.

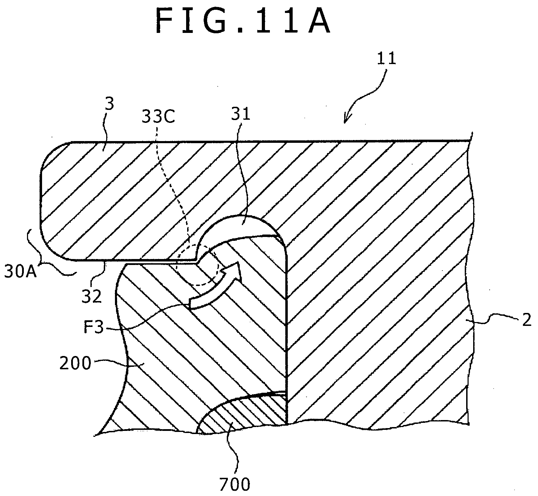

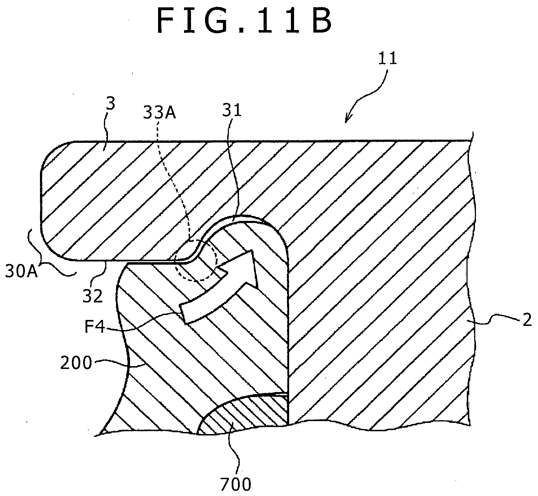

A state in which the dissimilar material joining rivet 1 of this embodiment is clinched to the first joined member 200 is to be described with reference to Fig. 11A and Fig. 11B. Fig. 11A is an explanatory view illustrating a state where the dissimilar material joining rivet 1 of this embodiment is clinched to the first joined member 200. Fig. 11B is an explanatory view illustrating a state where the dissimilar material joining rivet 11 of the modified example of this embodiment is clinched to the first joined member 200.

As illustrated in Fig. 11A, the first joined member 200 flows plastically into the annular groove 31 (in the direction of an arrow F3) as illustrated in Fig. 11A and the dissimilar material joining rivet 1 of this embodiment is clinched to the first joined member 200.

On the other hand, in the example illustrated in Fig. 11B, a second chamfered portion (curved surface portion 33A in the drawing) is formed to the outer edge of the annular groove 31. In this case, the first joined member 200 flows plastically into the annular groove 31 by a counter punch 700 (in the direction of an arrow F4) and, when the dissimilar material joining rivet 11 is clinched to the first joined member 200, plastic flow occurs more smoothly from the flat portion 32 to the annular groove 31.

As described above, in the dissimilar material joining rivet 11 of the modified example of this embodiment, since the second chamfered portion such as the curved surface portion 33A is formed to the outer edge of the annular groove 31, clinching force can be improved further.

### < Second Embodiment >

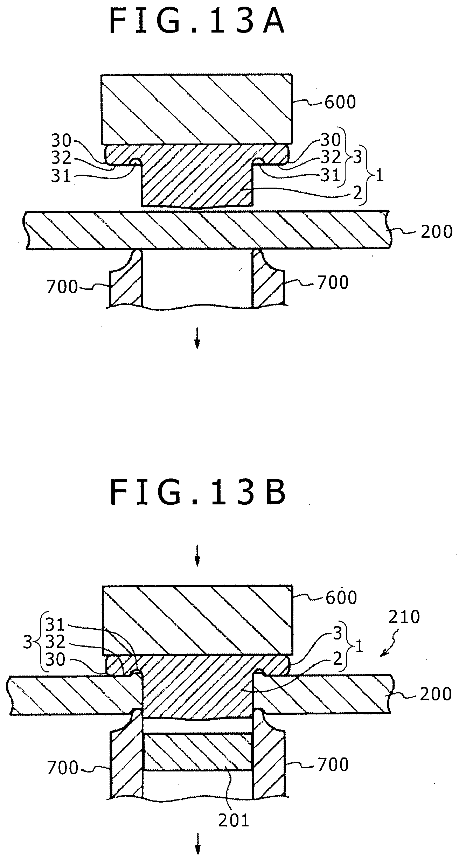

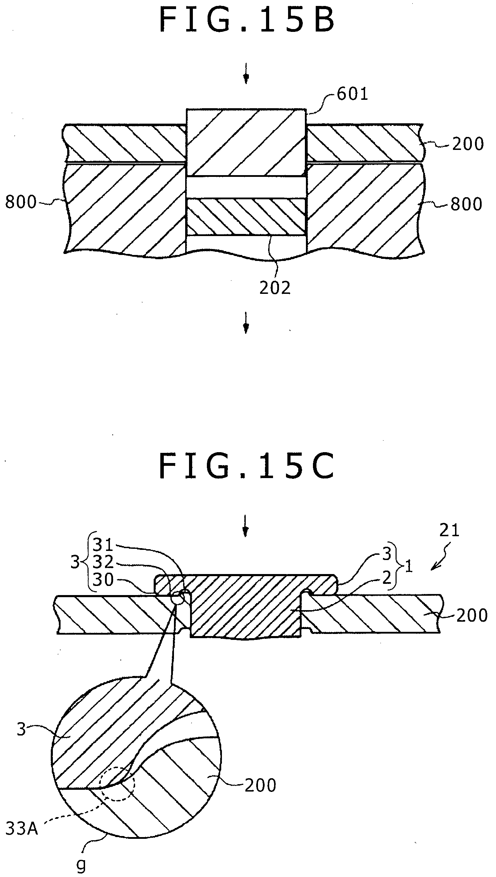

Then, a dissimilar material joining member 210 in a second embodiment of the present invention is to be described. A dissimilar material joining member 210 of this embodiment has the dissimilar material joining rivet 1 of the first embodiment described above and a first joined member 200 to which the dissimilar material rivet 1 is inserted (refer to Fig. 13B and Fig. 15C to be described later). In the manufacture of the dissimilar material joining member 210 of this embodiment, which will be described more specifically for a third embodiment, a stem 2 is inserted into the first joined member 200 as far as a position where the tip of the stem 2 protrudes from the first joined member 200 with the head 3 of the dissimilar material joining rivet 1 being in contact with the first joined member 200. Then, the first joined member 200 flows plastically to the annular groove 31 in a state where the first joined member 200 is retained by the flat portion 32 of the head 3, and the dissimilar material joining rivet 1 is clinched to the first joined member 200. In this manner, the dissimilar material joining member 210 of this embodiment is obtained.

The first joined member 200 constituting the dissimilar material joining member 210 is not particularly restricted and can be made of a light alloy material. The light alloy material includes specifically aluminum, aluminum alloys (2000 series, 3000 series, 4000 series, 5000 series, 6000 series or 7000 series according to JIS standards), magnesium, magnesium alloys, etc. Further, the first joined member 200 may also be CFRP (carbon fiber reinforced plastics). The first joined member 200 can be plate materials, shaped materials, die cast materials, cast materials, or press molding products of plate materials and extruded materials.

Since the dissimilar material joining member 210 of this embodiment has the dissimilar material joining rivet 1 of the first embodiment described above, piercing of the end of the head 3 of the dissimilar material joining rivet 1 into the first joined member 200 is suppressed. Accordingly, the dissimilar material joining member 210 of this embodiment has a high joining strength without embrittling the first joined member 200.

### < Third Embodiment >

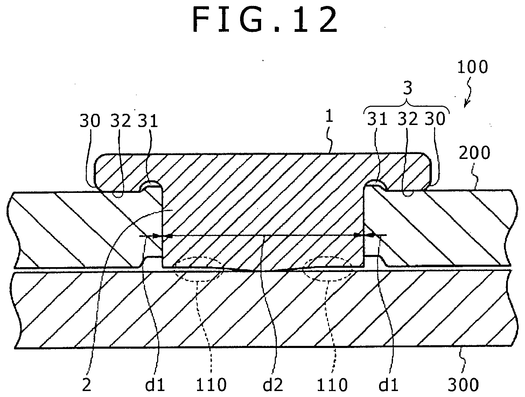

Then, a dissimilar material joined body 100 in a third embodiment of the invention is to be described. Fig. 12 is an axial cross sectional view illustrating a state of the dissimilar material joined body 100 of this embodiment before spot welding.

The dissimilar material joined body 100 of this embodiment has the dissimilar material joining rivet 1 of the first embodiment described above, the first joined member 200 described in the second embodiment and the second joined member 300 welded with the dissimilar material joining rivet 1. Since the first chamfered portion 30 is formed to the dissimilar material joining rivet 1 in the dissimilar material joined body 100 of this embodiment, piercing of the end of the head 3 of the dissimilar material joining rivet 1 into the first joined member 200 during spot welding is suppressed.

Further, the material of the second joined member 300 is different from that of the first joined member 200 and is not particularly restricted and can be, for example, a steel material. The steel material includes specifically high tensile steel material, galvanized steel sheets and stainless steels. The second joined member 300 can be formed, for example, of plate materials, shaped materials, cast materials, press molding products of plate materials, and hot stamped products.

A portion of the first joined member 200 superimposed on the second joined member 300 may be subjected to sealer treatment, coating with an adhesive containing a thermosetting resin or provided with an adhesive resin tape with a view point of corrosion inhibition. Further, a portion of the first joined member 200 in contact with the head 3 of the dissimilar material joining rivet 1 may also be subjected to a sealer treatment, coating with an adhesive containing a thermosetting resin or provided with an adhesive resin tape. Thus, plastic flow upon clinching can be improved further and corrosion resistance can be improved further.

In the dissimilar material joined body 100 of this embodiment, it is preferred that an axial diameter d1 for the stem 2 of the dissimilar material joining rivet 1 and a diameter d2 for a pore of the first joined member 200 through which the dissimilar material joining rivet 1 is inserted are substantially identical. The axial diameter d1 is a diameter for a circle in the columnar stem 2. Further, the pore diameter d2 is a diameter for a circular hole formed in the first joined member 200 through which the stem 2 is inserted. When the axial diameter for the stem 2 of the dissimilar material joining rivet 1 and the diameter for the pore in the first joined member 200 are made substantially identical, the dissimilar material joining rivet 1 can be positioned more accurately and the electrode 400 can be directed more accurately during spot welding. Further, the dissimilar material joining rivet 1 can be clinched more uniformly.

A gap 110 may also be formed between the tip of the dissimilar material joining rivet 1 and the second joined member 300. In this case, the tip of the dissimilar material joining rivet 1 may have a stepped shape, and a recess may be formed to the second joined member 300. Further, a stepped shape may be provided to the tip of the dissimilar material joining rivet 1, and a recess may also be formed to the second joined member 300 at the periphery thereof. Since this shuts heat transfer from a molten portion (nugget) X at high temperature formed during welding by the gap (space), softening of the first joined member 200 can be suppressed.

### (Method of manufacturing dissimilar material joined body 100)

Then, a method of manufacturing the dissimilar material joined body 100 of this embodiment is to be described. Fig. 13A to Fig. 13C are explanatory views illustrating an example of a manufacturing step (piercing method) of the dissimilar material joined body 100 of this embodiment.

First, as illustrated in Fig. 13A, a first joined member 200 is placed over a cylindrical counter punch 700, and a dissimilar material joining rivet 1 is disposed above the counter punch 700. The dissimilar material joining rivet 1 is driven into the first joined member 200 by a punch 600. The dissimilar material joining rivet 1 can be arranged by a cassette type rivet supply guide (not illustrated) disposed at a predetermined position of a molding die, for example, before and after the pressing or during press forming.

Then, as illustrated in Fig. 13B, when the punch 600 is lowered to drive the dissimilar material joining rivet 1 into the first joined member 200, the first joined member 200 is blanked out by a sharing force between the stem 2 and the counter punch 700. A blanked out portion 201 falls into the counter punch 700. The dissimilar material joining rivet 1 is urged by the punch 600 to the first joined member 200. Accordingly, a portion of the first joined member 200 put between the head 3 and counter punch 700 flows plastically and is driven into the annular groove 31 formed at the periphery of the stem 2 of the head 3.

Thus, the stem 2 penetrates the first joined member 200 to perforate the first joined member 200 and the tip of the stem 2 is exposed to the lower surface of the first joined member 200 in a state where the head 3 is in contact with the first joined member 200 or in a state where the head 3 is driven into the first joined member 200. Further, the first joined member 200 intrudes into the annular groove 31 at the periphery of the stem 2 at the lower surface of the head 3 and the dissimilar material joining rivet 1 is clinched to the first joined member 200. In this manner, the dissimilar material joining member 210 of the second embodiment described above is obtained. In a case where the second chamfered portion such as a curved surface portion 33A is formed to the outer edge of the annular groove 31, the clinching force can be improved more.

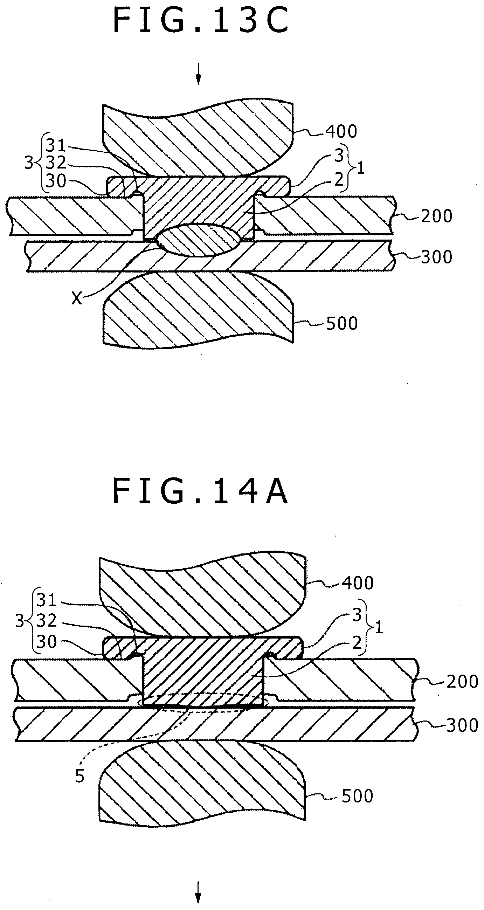

Then, an illustrated in Fig. 13C, the first joined member 200 to which the dissimilar material joining rivet 1 has been clinched is conveyed to a resistance spot welding device and superimposed on the second joined member 300 to form a lap joint. In this case, the first joined member 200 and the second joined member 300 are disposed such that the dissimilar material joining rivet 1 is situated between the spot electrodes 400 and 500. Then, the upper and the lower electrodes 400 and 500 are driven so as to approach each other, a holding force is exerted between the first joined member 200 and the second joined member 300, and a pulse current is applied between the electrodes 400 and 500, thereby subjecting the dissimilar material joining rivet 1 and the second joined member 300 to resistance spot welding. Thus, the dissimilar material joined body 100 is obtained.

A coating film 4 having a resistivity higher than that of the base material of the second joined member 300 preferably covers the surface of the head 3 in contact with the first joined member 200. This can prevent a welding current flowing from the electrode 400 by way of the dissimilar material joining rivet 1 to the second joined member 300 from shunting to the first joined member 200. Further, since the regions in contact with the electrode 400 of the spot welding and the second joined member 300 are not covered, current flows concentrically to the second joined member 300. Accordingly, the dissimilar material joining rivet 1 and the second joined member 300 can be spot welded more efficiently.

In the dissimilar material joined body 100 of this embodiment, the first chamfered portion 31 is formed along the outer edge of the head 3 of the dissimilar material joining rivet 1 at the surface in contact with the first joined member 200. Accordingly, even when the axis of the electrode 400 and the axis of the dissimilar material joining rivet 1 are positionally displaced during spot welding, tilting of the dissimilar material joining rivet 1 and depression of the head 3 into the first joined member 200 can be suppressed. As a result, the dissimilar material joined body 100 of this embodiment has a high joining strength without lowering the clinching force of the first joined member 200.

Description has been made herein to an example of manufacturing the dissimilar material joined body 100 by holding the rivet 1, the first joined member 200, and the second joined member 300 between two electrodes as the electrode, but a so-called one side spot welding of placing the electrode only on the head 3 of the rivet 1 may also be adopted.

Further, the tip region 5 of the stem may also be flared from the axial center toward the outer edge while applying the resistance spot welding described above. Fig. 14A and Fig. 14B illustrate an example of a method of manufacturing the dissimilar material joined body 100 of this embodiment and they are explanatory views illustrating the step of spot welding the dissimilar material joining rivet 1 clinched to the first joined member 200 and the second joined member 300.

First, by way of the step explained with reference to Fig. 13A and Fig. 13B, the first joined member 200 clinched to the dissimilar material joining rivet 1 is conveyed to a resistance spot welding device as illustrated in Fig. 14A, superimposed on the second joined member 300 to form a lap joint. In this case, the first joined member 200 and the second joined member 300 are disposed such that the rivet 1 is situated between the spot electrodes 400 and 500.

Then, as illustrated in Fig. 14B, the upper and the lower electrodes 400 and 500 are driven so as to approach each other. Then, a holding force exerts between the first joined member 200 and the second joined member 300 and a welding current is applied between the electrodes 400 and 500, by which the dissimilar material joining rivet 1 and the second joined member 300 are subjected to resistance spot welding. Thus, the dissimilar material joined body 100 is obtained. In this case, the tip region 5 flows plastically by a pressing force F of the electrodes 400 and 500 into a flare shape to form a top end 6. Thus, even when a force exerts on the dissimilar material joining rivet 1 in the direction detaching from the first joined member 200, since the top end 6 is caught by the first joined member 200, the dissimilar material joining rivet 1 less detaches from the first joined member 200.

Welding conditions are preferably set to a pressing force of the electrodes 400 and 500 of 0.3 to 10 kN and a welding current of 2 to 10 kA. Further, the current supply time is preferably from 5 to 1000 msec. When welding is applied in the ranges, the tip region 5 of the stem 2 tends to spread into a flare shape.

Then, another example of a method of manufacturing the dissimilar material joined body 100 of this embodiment (lower hole method) is to be described. Fig. 15A to Fig. 15C are explanatory views illustrating an example of another manufacturing step for a dissimilar material joined body 100 of this embodiment.

First, as illustrated in Fig. 15A, a first joined member 200 is placed on a dice 800 formed with a round hole and a punch 601 is disposed above the hole of the dice 800. Then, a punch 601 is driven into the first joined member 200.

Then, as illustrated in Fig. 15B, the punch 601 lowers and a portion of the first joined member 200 is blanked out. A blanked out portion 202 falls into a dice 800. Then, as illustrated in Fig. 15C, a dissimilar material joining rivet 1 is inserted or pressed into the apertured first joined member 200 and mounted thereby. Clinching is not particularly restricted and, for example, clinching can be carried out at timing identical with insertion of the dissimilar material joining rivet 1 or after insertion under pressure. Then, the step of welding the rivet 1 and the second joined member 300 is conducted in the same manner as the step that has been explained with reference to Fig. 13A to Fig. 13C and Fig. 14A and Fig. 14B, to obtain the dissimilar material joined body 100. As illustrated in an enlarged area g in Fig. 15C, a second chamfered portion such as a curved surface portion 33A is preferably formed to the head 3 in order to improve the clinching force further.

As has been described above specifically, since the dissimilar material joined body 100 of this embodiment has the dissimilar material joining rivet 1 of the first embodiment described above, tilting of the dissimilar material joining rivet 1 by piercing of the end of the head 3 of the dissimilar material joining rivet 1 into the first joined member 200 is suppressed. Accordingly, the dissimilar material joined body 100 of this embodiment has high joining strength without embrittling the first joined member 200.

Further, in the dissimilar material joined body 100 of this embodiment, the stem 2 of the dissimilar material joining rivet 1 may be spot welded to the second joined member 300, and the tip region 5 of the stem 2 may be expanded in a flare shape being softened by the heat of spot welding and pressed by the electrodes 400 and 500. Thus, the dissimilar material joined body 100 is in a shape in which the flare shape top end 6 formed by flaring expansion of the tip region 5 of the dissimilar material joining rivet 1 and the first joined member 200 are engaged each other, so that the dissimilar material joining rivet 1 less detaches from the first joined member 200. Accordingly, the dissimilar material joined body 100 of this embodiment can have a higher joining strength.

The present application is based on Japanese Patent Application filed on July 22, 2013 (Patent Application No. 2013-151393), and Japanese Patent Application filed on March 20, 2014 (Patent Application No. 2014-57476), the contents of which are incorporated herein for the reference.

### List of Reference Signs

- 1, 11: dissimilar material joining rivet
- 2: stem
- 3: head
- 6: flare shape top end
- 30: first chamfered portion
- 30A: curved surface portion
- 30B: C-shaped chamfered portion
- 31: annular groove
- 32: flat portion
- 33A: curved surface portion
- 33B: C-shaped chamfered portion
- 40, 42: first bulge
- 41: protrusion
- 43: second bulge
- 44: recess
- 100: dissimilar material joined body
- 200: first joined member
- 210: dissimilar material joining member
- 300: second joined member
- 400, 500: electrode

## Claims

1. A dissimilar material joining rivet including:
a stem inserted through a first joined member and welded at a tip thereof to a second joined member made of a material different from that of the first joined member, and
a plate-like head disposed to the base end of the stem on the side axially opposite to the tip, wherein
the head is formed with
a first chamfered portion situated to the outer edge of a surface in contact with the first joined member,
an annular groove situated along the periphery of the stem at the surface in contact with the first joined member, and
a flat portion situated between the first chamfered portion and the annular groove at the surface in contact with the first joined member,
the rivet comprising a material resembling that of the second joined member.

2. The dissimilar material joining rivet according to claim 1, wherein a second chamfered portion is formed to the outer edge of the annular groove.

3. The dissimilar material joining rivet according to claim 2, wherein the second chamfered portion is a curved surface portion or a C-shaped chamfered portion.

4. The dissimilar material joining rivet according to claim 1, wherein the first chamfered portion is a curved surface portion or a C-shaped chamfered portion.

5. A dissimilar material joining member having
a dissimilar material joining rivet according to any one of claims 1 to 4, and
the first joined member to which the dissimilar material joining rivet is inserted, wherein
the stem is inserted into the first joined member as far as a position where the head is in contact with the first joined member and the tip of the stem protrudes from the first joined member, and
the first joined member flows plastically into the annular groove while the first joined member is urged by the flat portion of the head and the dissimilar material joining rivet is clinched to the first joined member.

6. A method of manufacturing a dissimilar material joined body, comprising
a step of inserting the dissimilar material joining rivet according to any one of claims 1 to 4 into the first joined member as far as a position where the head is in contact with the first joined member and the tip of the stem protrudes from the first joined member, and
causing the first joined member to flow plastically into the annular groove while urging the first joined member by the flat portion of the head thereby clinching the dissimilar material joining rivet to the first joined member,
a step of superimposing the first joined member to which the dissimilar material joining rivet is clinched over the second joined member, and
a step of spot welding the second joined member and the dissimilar material joining rivet.

7. The method of manufacturing the dissimilar material joined body according to claim 6, wherein
in the step of spot welding the second joined member and the dissimilar material joining rivet,
a current is supplied to the second joined member and the dissimilar material joining rivet while the head of the dissimilar material joining rivet is pressed by an electrode, thereby flaring the tip region of the stem from the axial center to the direction of the outer edge while welding the tip of the stem and the second joined member.

8. A dissimilar material joined body manufactured by the method of manufacturing the dissimilar material joined body according to claim 6.
